# EUROPÄISCHE PATENTSCHRIFT

(11) **EP 2 412 082 B1**
(45) Veröffentlichungstag und Bekanntmachung des Hinweises auf die Patenterteilung: **22.01.2014**
(21) Anmeldenummer: 10710213.9
(22) Anmeldetag: 17.03.2010
(51) Int. Cl.: H02K 7/12, H02K 7/102, F16D 121/22

(54) **ELEKTROMOTOR**
ELECTRIC MOTOR
MOTEUR ÉLECTRIQUE

(30) Priorität: 25.03.2009 DE 102009014783
(43) Veröffentlichungstag der Anmeldung: 01.02.2012
(73) Patentinhaber: Metabowerke GmbH, 72622 Nürtingen (DE)
(72) Erfinder: HILLER, Matthias, 72657 Altenriet (DE); SPIELMANN, Andreas, 73268 Erkenbrechtsweiler (DE)
(74) Vertreter: Raunecker, Klaus Peter
(86) Internationale Anmeldenummer: PCT/EP2010/001655
(87) Internationale Veröffentlichungsnummer: WO 2010/108621

(56) Entgegenhaltungen:
- WO-A1-2004/088820
- WO-A1-2004/088821
- DE-A1- 19 833 445
- US-A- 2 959 695

## Beschreibung

Die Erfindung betrifft einen Elektromotor mit elektromotorischer Bremse, insbesondere für Winkelschleifer, mit einem Stator, der wenigstens ein Polpaar aufweist, mit wenigstens zwei jeweils einen nach innen zu einem Rotor hin gerichteten Polschuh aufweisenden Polen, wobei jeder Polschuh von einer Wicklung umgeben ist, und wobei der Stator mindestens eine Bremseinrichtung zum Abbremsen des Rotors aufnimmt, die ein Bremselement umfasst. Dabei ist das Bremselement zum Bremsen gegen den Außenumfang des Rotors bewegbar und durch das magnetische Feld im bestromten Zustand des Elektromotors gegen eine Bremskraft bewegbar, so dass die Bremseinrichtung im bestromten Zustand des Elektromotors gelöst ist.

Elektromotoren mit elektromagnetischer Bremse sind aus dem Stand der Technik bereits bekannt.

So beschreibt beispielsweise die GB 920,485 einen Elektromotor mit einem Gehäuse sowie Polen, die im Gehäuse festgelegt sind, und einem Rotor sowie einem magnetischen Bremselement, das innerhalb der Pole angeordnet ist, wobei das Bremselement eine Abbremsung des Rotors bewirkt, wenn es mit einer Bremskraft beaufschlagbar ist bzw. nicht durch eine der Bremskraft entgegenwirkende Kraft vom Rotor abgehoben wird. Das Dokument beschreibt eine rein radial wirkende Bremseinrichtung, so dass die maximal erzielbare Bremswirkung vergleichsweise gering ist.

Ein weiterer Elektromotor mit Bremse ist darüber hinaus aus der DE 847 933 bekannt, wobei die Bremse aus einem als Wippe ausgebildeten Arm des Stators besteht. Ein anderer als Spaltmotor ausgebildeter Elektromotor mit Bremseinrichtung ist aus DE 538 902 bekannt; deren Bremshebel ist in komplizierter Weise an dem beweglichen Ständerteil des Motors befestigt und wird mit diesem verlagert. Es ist zudem eine Bremstrommel vorgesehen, die von innen gebremst wird.

EP 1 149 458 B1 beschreibt einen Elektromotor mit elektromagnetischer Bremse, insbesondere für einen Winkelschleifer, der gattungsgemäßen Art, wobei hier die Bremseinrichtung in einem Pol aufgenommen ist und das Bremselement als Wippe ausgebildet ist, die innerhalb eines Freiraums des Pols um eine Schwenkachse bewegbar gelagert ist, wobei das Bremselement ein mehrarmiger Hebel mit einem Bremsarm und einem Ausrückarm ist und der Bremsarm mit einer Bremskraft beaufschlagbar und der Ausrückarm bei bestromter Wicklung eine der Bremskraft entgegengerichtete Ausrückkraft auf das Bremselement ausübt. Einen ähnlichen Motor mit Bremseinrichtung innerhalb eines Polschuhs zeigt WO 2004/088821.

Es ist nun Aufgabe der Erfindung, eine alternative Ausgestaltung eines Elektromotors bereitzustellen, bei der eine große Bremskraft zur Verfügung gestellt werden kann und die auf wirtschaftliche Weise herstellbar sowie prozesssicher ist.

Die Erfindung löst diese Aufgabe durch einen Elektromotor mit den Merkmalen des Anspruchs 1, wobei die Bremseinrichtung im Stator in Umfangsrichtung zwischen zwei Polen angeordnet ist und das Bremselement als einarmiger Bremshebel ausgebildet ist, der an seinem einen Ende um einen Drehpunkt im Stator verschwenkbar ist, so dass auf eine Lagerung des Bremshebels durch eine Welle oder Achse verzichtet ist.

Die Lagerung des Bremselements erfolgt also nicht über eine Drehachse, sondern das Bremselement wird um einen Drehpunkt im Gehäuse des Stators schwenkbar gelagert. Hierbei erfolgt die Führung nicht über eine Drehachse, sondern vorteilhafterweise über eine Kulissenführung, wobei die Kulisse durch das Statorgehäuse ausgebildet-wird. Durch die Vorsehung einer Kulissenführung im Joch des Stators sowie eines einarmigen Bremshebels kann auf eine Lagerung über eine Welle verzichtet werden.

Der Drehpunkt ist an einem Ende des Bremshebels vorgesehen, wobei der Bremshebel mit diesem Ende in der Kulisse im Stator geführt ist und so verschwenkt werden kann.

Die Anordnung des Bremshebels in Umfangsrichtung zwischen den Polen und den Polschuhen eröffnet weitere Freiheitsgrade bei der Konstruktion, da dort ein besserer Zugang zum Außenumfang des Rotors gegeben ist.

Es erweist sich weiter als vorteilhaft, wenn der Drehpunkt des Bremshebels in Bezug auf einen Bremsbelag des Bremshebels und die Drehrichtung des Rotors ablaufseitig angeordnet ist. Die Rotation des Rotors im Bremsbetrieb, also im nicht bestromten Zustand des Elektromotors ist dann derart, dass die bremsende Wirkung des Bremshebel durch den Auflauf des Rotors verstärkt wird.

Weiter ist vorgesehen, dass das Bremselement aus einem magnetisch leitenden Material besteht, um so ein Öffnen der Bremse bei Bestromen des Feldes zu erreichen, indem die magnetische Kraft der Bremskraft, die das Bremselement gegen den Rotor andrückt, entgegenwirkt und so das Bremselement vom Rotor hebt.

Weiter kann vorgesehen sein, dass das Bremselement auf seiner dem Rotor zugewandten Seite einen Bremsbelag aufweist. Der Bremsbelag kann aus einem nicht leitenden Material ausgebildet sein, so dass hierdurch verhindert wird, dass der Bremsbelag beim Bestromen des Feldes in Richtung auf den Rotor mit Kraft beaufschlagt wird.

Dabei kann vorgesehen sein, dass der Bremsbelag in radialer Richtung eine solche Dicke aufweist, dass er den Spalt zwischen dem Stator und dem Rotor überbrückt. Auch im abgehobenen Zustand des Bremsbelags vom Rotor besteht vorzugsweise lediglich ein geringer Spalt zwischen Bremsbelag und Rotor. Der Spalt kann im abgehobenen Zustand dem Spalt zwischen Polschuh und Rotor entsprechen. So muss nur das Bremselement einen geringen Weg machen beim Ausrücken aus der Bremsposition.

Des Weiteren kann bevorzugt vorgesehen sein, dass die Bremskraft durch eine Feder aufgebracht wird. Die Feder kann dabei im Wesentlichen in radialer Richtung verlaufen, wie es beispielsweise im Stand der Technik gemäß EP 1 149 458 B1 vorgesehen ist. Darüber hinaus kann besonders bevorzugt vorgesehen sein, dass eine axial verlaufende Feder vorgesehen ist, die das Bremselement mit einer Bremskraft in Richtung des Rotors beaufschlagt, wobei die Feder als Stabfeder ausgebildet sein kann. Eine derartige Vorsehung einer Stabfeder bietet den Vorteil gegenüber der Vorsehung einer radialen Feder, wie es der Stand der Technik beschreibt, dass auf die Vorsehung mehrerer Federelemente verzichtet werden kann. Alternativ können jedoch auch andere Federn oder Federelemente vorgesehen sein, z. B. radial wirkende Federn.

Unter axialer Richtung soll stets die axiale Richtung einer Motorwelle verstanden werden.

Dabei kann vorgesehen sein, dass mehr als eine Bremseinrichtung vorgesehen ist. Insbesondere kann bei einem zweipoligen Elektromotor vorgesehen sein, dass an zwei einander gegenüberliegenden Seiten zwischen den Polen Bremseinrichtungen vorgesehen sein können. Die Bremseinrichtungen sind dann in der Regel rotationssymmetrisch ausgebildet. Grundsätzlich kann auch vorgesehen sein, dass mehr als zwei Pole vorgesehen sind, wobei dann eine oder mehrere Bremseinrichtungen zwischen den Polen angeordnet werden können. Dabei sind die Bremseinrichtungen, die zwischen den Polen angeordnet sind, in keinem Fall durch die Erregerwicklungen, die den Polschuh umschließen, umschlossen.

Besonders bevorzugt ist vorgesehen, dass die Fläche des Bremselements, auf die der Bremsbelag aufgebracht ist, und die in Richtung auf den Rotor weist, die Kontur des Stators, der das Bremselement umgibt, fortführt. D. h., den Spalt zwischen Stator und Rotor überbrückt in diesem Fall lediglich der Bremsbelag. Der Bremsbelag muss hierfür eine ausreichende Dicke in radialer Richtung aufweisen.

Des Weiteren kann vorgesehen sein, dass am Bremshebel Kurzschlusswicklungen vorgesehen sind, wobei mindestens eine Kurzschlusswicklung vorgesehen ist.

Die Kurzschlusswicklung dient dabei dazu, ein Flattern des Hebels und damit der Bremse in Wechselstrombetrieb zu verhindern.

Die Bremseinrichtung kann dabei hinsichtlich der Drehrichtung des Rotors z. B. auflaufend angeordnet sein. In diesem Fall besitzt sie eine selbstverstärkende Wirkung. Bei umgekehrter Anordnung zur Drehrichtung wird die Bremskraft nur durch die Federkraft bestimmt. Allerdings ist in diesem Fall das Öffnen und Schließen der Bremseinrichtung leichter zu kontrollieren. In axialer Richtung kann sich dabei insbesondere das Bremselement über die gesamte Länge des Stators erstrecken oder nur über einen Teil hiervon. Insbesondere kann vorgesehen sein, dass es sich über annähernd die gesamte axiale Länge erstreckt und lediglich an den beiden Enden des Stators in axialer Richtung aus Stabilitätsgründen kein Bremselement vorgesehen ist.

Die Erfindung betrifft des Weiteren ein Elektrohandwerkzeuggerät, insbesondere einen Winkelschleifer, mit einem Elektromotor der vorstehend beschriebenen Art.

Weitere Vorteile und Merkmale ergeben sich aus den übrigen Anmeldungsunterlagen. Die Erfindung soll im Folgenden anhand einer Zeichnung näher erläutert werden. Dabei zeigen:
- Figur 1: einen Schnitt durch einen Elektromotor;
- Figur 2: eine Draufsicht in axialer Richtung auf einen Elektromotor und
- Figur 3: eine perspektivische Darstellung des entsprechenden Elektromotors.

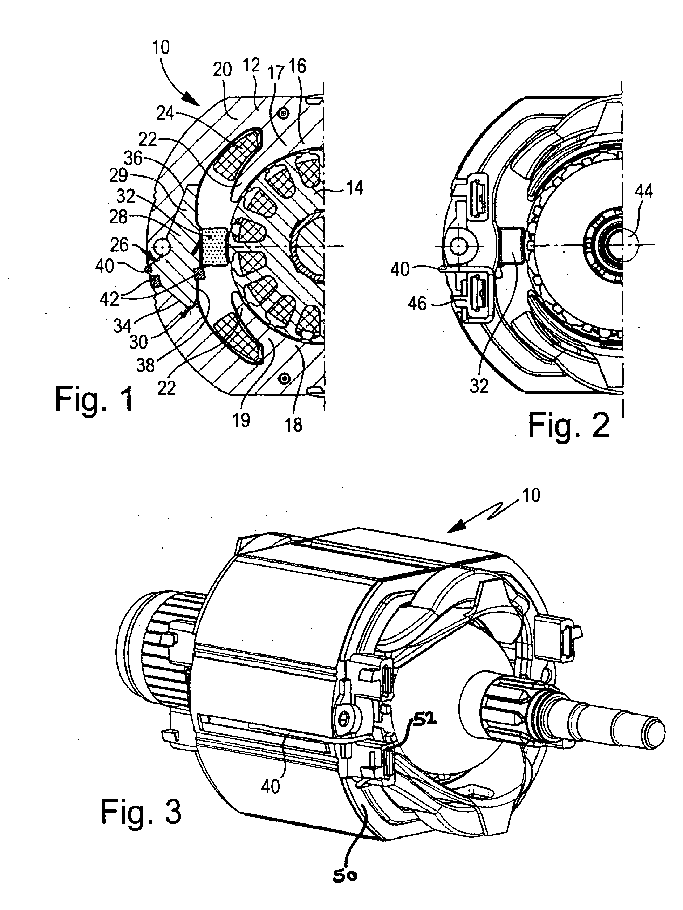

In Figur 1 ist ein Elektromotor mit dem Bezugszeichen 10 bezeichnet, wobei vom Elektromotor 10 lediglich die in der Darstellung linke Hälfte gezeigt ist. Die rechte Hälfte des Elektromotors 10 kann rotationssymmetrisch ausgebildet sein. Der Elektromotor umfasst dabei einen Stator 12 sowie einen Rotor 14. Der Stator 12 umfasst ein Polpaar, von dem ein erster Pol mit dem Bezugszeichen 16 und ein zweiter Pol mit dem Bezugszeichen 18 bezeichnet ist. Die Pole 16, 18 liegen einander diametral gegenüber. Die Pole 16, 18 umfassen dabei Polschuhe 17, 19, die von einem Joch 20 nach innen in Richtung auf den Rotor gerichtet sind und jeweils zwei Polhörner 22 aufweisen, wobei je Polschuh 17, 19 nur ein Polhorn 22 gezeigt ist. Zwischen den Polhörnern 22 und dem Joch 20 sind Wicklungen 24 vorgesehen, die sich in einem Zwischenraum, der durch den Abstand von Polhorn 22 zum Joch 20 gebildet wird, befinden und in Umfangsrichtung nicht über die Enden der Polhörner 22 hinausragen.

Der Rotor dreht dabei vorzugsweise im Uhrzeigersinn. Es kann jedoch auch eine umgekehrte Drehrichtung vorgesehen sein.

Die Wicklung 24 umgibt somit den jeweiligen Polschuh 17, 19.

In Umfangsrichtung zwischen den beiden Polen 16, 18 ist eine Bremseinrichtung 26 vorgesehen, die ein Bremselement 28 umfasst, das als einarmiger Bremshebel 29 ausgebildet ist. Der Bremshebel 29 ist dabei um einen Drehpunkt 30 im Stator 12 drehbar gelagert. Der Drehpunkt 30 ist an einem Ende des einarmigen Bremshebels 29 vorgesehen, wobei die Führung des Bremshebels 29 im Stator 12 über eine Kulissenführung realisiert ist. Auf diese Weise ist eine Lagerung des Bremshebels 29 über eine Welle nicht länger notwendig.

Der Bremshebel 29 trägt einen Bremsbelag 32, der im dargestellten Zustand vom Rotor 14 abgehoben ist, so dass zwischen dem Bremsbelag 32 und dem Rotor 14 ein geringer Spalt besteht, wobei der Spalt zwischen dem Bremsbelag 32 und dem Rotor 14 dem Spalt hinsichtlich der Abmessungen zwischen dem Rotor 14 und den Polschuhen 17, 19 entspricht. Der Bremsbelag 32 ist auf der Seite 38 des Bremshebels 29 angeordnet, die zum Rotor 14 weist.

Der Bremsbelag 32 ist dabei so angeordnet, dass er eine radiale Bremskraft auf den Rotor 14 aufzubringen vermag. Er befindet sich im wesentlichen mittig auf dem Bremshebel 29 und erstreckt sich nicht über die gesamte Länge des Hebelarms des Bremshebels 29.

Das Material des Bremsbelags 32 ist dabei aus einem im Wesentlichen nicht magnetisch leitenden Material gebildet, wohingegen das Material des Bremshebels 29 aus einem magnetisch leitenden Material gebildet ist. Dabei bildet der Bremshebel 29 zwei Kontaktflächen 34 und 36 mit dem Stator 12 aus. Erfolgt eine Verschwenkung des Bremshebels 29 um den Drehpunkt 30, so werden die Kontaktflächen 34 und 36 von den zugehörigen Flächen des Stators 12 abgehoben, so dass sich hier ein geringfügiger Spalt ergibt. Hierdurch wird der Bremsbelag 32 gegen den Rotor 14 zur Anlage gebracht.

Darüber hinaus weist der Bremshebel 29 eine Fläche 38 auf, die in Richtung auf den Rotor 14 gerichtet ist, wobei die Fläche 38 im Wesentlichen der Kontur des Stators 12 folgt.

Zur Aufbringung einer Bremskraft ist eine Feder 40 vorgesehen, die in axialer Richtung verläuft, so dass die Feder 40 über ihre axiale Länge gegen den Bremshebel 29 anliegt und diesen über die gesamte oder annähernd die gesamte Länge mit einer radialen Kraft nach innen beaufschlagt, so dass der Bremshebel 29 gegen den Außenumfang des Rotors 14 gedrückt wird. Die Anbringung der Feder 40 ist dabei in den Figuren 2 und 3 dargestellt. Es handelt sich hierbei um eine Stab- oder Schenkelfeder.

Wird nun der Elektromotor 10 eingeschaltet, d. h. die Wicklungen 24 bestromt, wird im Stator 12 ein magnetischer Fluss induziert, der dazu führt, dass die Kontaktflächen 34 und 38 sich den zugehörigen korrespondierenden Flächen des Stators 12 nähern und gegen diese zur Anlage kommen. Dabei folgt die Kontur der Kontaktflächen 34 und 36 genau der Kontur des Stators 12 in diesem Bereich. Diese Kraft wirkt der durch die Feder 40 bereitgestellten Bremskraft, die radial nach innen wirkt, entgegen, wobei die durch den magnetischen Fluss induzierte Kraft betragsmäßig größer ist als die Bremskraft, so dass es zu einem Außerkontaktkommen des Bremsbelags 32 mit dem Rotor 14 kommt. Dazu führt der Bremshebel 29 eine begrenzte Verschwenkung um den Drehpunkt 30 durch, die jedoch ausreichend ist, den Bremsbelag 32 vom Rotor 14 abzuheben. Dabei sind die Flächen des Bremshebels bestrebt, den Spalt zwischen sich und den Flächen des Stators zu schließen.

Darüber hinaus ist eine Kurzschlusswicklung 42 vorgesehen, die verhindern soll, dass es zu einem Vibrieren der Bremseinrichtung 26 bei bestromter Wicklung 24 kommt, was dazu führen würde, dass der Bremsbelag 32 kurzzeitig immer wieder mit dem Rotor 14 in Kontakt käme und zu einem Flattern der Bremse und Geräuschen führen würde.

Wird der Elektromotor 10 ausgeschaltet, lässt die magnetische Wirkung der Wicklungen 24 nach und somit auch die Kräfte, die den Bremshebel 28 mit seinen Kontaktflächen 34 und 36 gegen die korrespondierenden Flächen des Stators 12 festhalten. Die durch die Feder 40 aufgebrachte Bremskraft übersteigt dann die Kraft, die den Bremsbelag 32 vom Rotor 14 abhebt, so dass der Bremsbelag 32 unter der Federkraft der Feder 40 gegen den Rotor 14 angedrückt wird. Zwischen den Kontaktflächen 34 und 36 und den zugehörigen Flächen des Stators besteht in diesem Zustand ein geringer Spalt.

Durch das Andrücken des Bremsbelags 32 gegen den Rotor wird eine Abbremsung des Rotors 14 erreicht. Die Bremseinrichtung 26 wird bei Ausschalten des Motors 10 automatisch ausgelöst.

In Figur 2 ist nun eine halbe Draufsicht auf einen entsprechenden Elektromotor, wie er in Figur 3 dann perspektivisch dargestellt ist, gezeigt. Die Antriebswelle des Elektromotors ist hier mit dem Bezugszeichen 44 bezeichnet.

Im Übrigen sind gleiche Bauteile mit gleichen Bezugszeichen bezeichnet, wobei hier die Befestigung der Feder 40 gesehen werden kann, die an einem Bauteil 46 festgelegt ist, so dass sie eine im Wesentlichen radiale Kraft auf das Bremselement 28 ausübt. Die Anordnung der Feder 40 ist dabei insbesondere auch noch in Figur 3 zu erkennen. Die Festlegung der Feder erfolgt dabei ein einem sogenannten Spulenstützkopf 50, wobei hier ungenutzte Kontaktierungselemente 52 zur Federbefestigung und Aufnahme dienen.

Durch die vorstehend beschriebene Ausgestaltung kann ein Elektromotor 10 bereitgestellt werden, bei dem eine einfache Lagerung einer Bremseinrichtung 26 außerhalb der Pole 16, 18 ermöglicht ist, wobei auf eine Lagerung um eine Schwenkachse verzichtet werden kann.

Besonders vorteilhaft ist dies bei einem Winkelschleifer, bei dem eine Trennscheibe bei Ausschalten des Motors 10 möglichst schnell abgebremst werden soll, um keinen nennenswerten Nachlauf der Trennscheibe nach Ausschalten des Motors 10 zu haben, da hiermit ein hohes Gefährdungspotential verbunden ist. Auf die vorstehend beschriebene Weise kann daher sichergestellt werden, dass bei Ausschalten des Motors 10 stets eine Trennscheibe eines Winkelschleifers schnellstmöglich abgestoppt wird.

## Patentansprüche

1. Elektromotor (10), insbesondere für einen Winkelschleifer, mit einem Stator (12), der wenigstens ein Polpaar (16, 18) aufweist, mit wenigstens zwei jeweils einen nach innen zu einem Rotor (14) hin gerichteten Polschuh (17, 19) aufweisenden Polen (16, 18), der von einer Wicklung (24) umgeben ist, wobei der Stator (12) mindestens eine Bremseinrichtung (26) zum Abbremsen des Rotors (14) aufnimmt, die ein Bremselement (28) umfasst, wobei das Bremselement (28) zum Bremsen gegen den Außenumfang des Rotors (14) bewegbar und durch das magnetische Feld im bestromten Zustand des Elektromotors (10) entgegen der Bremskraft bewegbar ist, wobei die Bremseinrichtung (26) im Stator (12) in Umfangsrichtung zwischen den zwei Polen (16, 18) angeordnet ist, **dadurch gekennzeichnet, dass** das Bremselement (28) als einarmiger Bremshebel (29) ausgebildet ist, der an seinem einen Ende um einen Drehpunkt (30) im Stator (12) verschwenkbar ist, so dass auf eine Lagerung des Bremshebels (29) durch eine Welle oder Achse verzichtet ist.

2. Elektromotor nach Anspruch 1, **dadurch gekennzeichnet, dass** das Bremselement (28) in einer Kulissenführung im Joch des Stators (12) geführt ist.

3. Elektromotor nach Anspruch 1 oder 2, **dadurch gekennzeichnet, dass** der Drehpunkt (30) des Bremshebels (29) in Bezug auf einen Bremsbelag (32) und die Drehrichtung des Rotors (14) ablaufseitig angeordnet ist.

4. Elektromotor nach Anspruch 1, 2 oder 3, **dadurch gekennzeichnet, dass** das Bremselement (28) aus einem magnetisch leitenden Material besteht.

5. Elektromotor nach einem der vorangehenden Ansprüche, **dadurch gekennzeichnet, dass** das Bremselement (28) auf seiner dem Rotor (14) zugewandten Seite einen Bremsbelag (32) aufweist, der vorzugsweise aus einem nicht magnetisch leitenden Material besteht.

6. Elektromotor nach einem der vorangehenden Ansprüche, **dadurch gekennzeichnet, dass** eine axial verlaufende Feder (40) vorgesehen ist, die das Bremselement (28) mit einer Bremskraft in Richtung des Rotors (14) beaufschlagt, wobei die Feder (40) insbesondere als Stabfeder ausgebildet ist.

7. Elektromotor nach einem der vorangehenden Ansprüche 1 bis 4, **dadurch gekennzeichnet, dass** die Feder als radial wirkende Feder ausgebildet ist, wobei eine oder mehrere radial wirkende Federn vorgesehen sind.

8. Elektromotor nach einem der vorangehenden Ansprüche, **dadurch gekennzeichnet, dass** mehr als eine Bremseinrichtung (26) vorgesehen ist.

9. Elektromotor nach einem der vorangehenden Ansprüche, **dadurch gekennzeichnet, dass** eine in Richtung auf den Rotor (14) gerichtete Fläche (38) des Bremselements (28) der Kontur des Stators (12) der das Bremselement (28) umgibt fortführt.

10. Elektromotor nach einem der vorangehenden Ansprüche, **dadurch gekennzeichnet, dass** am Bremselement (28) mindestens eine Kurzschlusswicklung (42) vorgesehen ist.

11. Elektrohandwerkzeuggerät, insbesondere Winkelschleifer, mit einem Motor nach einem der Ansprüche 1 bis 9.

## Claims

1. Electric motor (10), in particular for an angle grinder, having a stator (12), which has at least one pole pair (16, 18) with at least two poles (16, 18), which poles each have a pole shoe (17, 19) directed inwardly towards a rotor (14) and surrounded by a winding (24), the stator (12) accommodating at least one braking device (26) for braking the rotor (14), which braking device comprises a breaking element (28), the braking element (28) being movable against the outer circumference of the rotor (14) for the purpose of braking and being movable counter to the braking force by the magnetic field in the energised state of the electric motor (10), the braking device (26) being arranged in the stator (12) between the two poles (16, 18) in the circumferential direction, **characterised in that** the braking element (28) is in the form of a one-armed brake lever (29) which is pivotable at one of its ends about a fulcrum (30) in the stator (12), with the result that there is no need for a bearing of the brake lever (29) by means of a shaft or spindle.

2. Electric motor according to Claim 1, **characterised in that** the braking element (28) is guided in a slotted-link guide in the yoke of the stator (12).

3. Electric motor according to Claim 1 or 2, **characterised in that** the fulcrum (30) of the brake lever (29) is arranged on the trailing side with respect to a brake lining (32) and the direction of rotation of the rotor (14).

4. Electric motor according to Claim 1, 2 or 3, **characterised in that** the breaking element (28) is composed of a magnetically conductive material.

5. Electric motor according to one of the preceding claims, **characterised in that** the braking element (28) has a brake lining (32) on its side facing the rotor (14), the brake lining being composed preferably of a magnetically nonconductive material.

6. Electric motor according to one of the preceding claims, **characterised in that** an axially extending spring (40) is provided which acts on the breaking element (28) with a braking force in the direction of the rotor (14), the spring (40) being formed in particular as a bar spring.

7. Electric motor according to one of the preceding Claims 1 to 4, **characterised in that** the spring is formed as a radially acting spring, one or more radially acting springs being provided.

8. Electric motor according to one of the preceding claims, **characterised in that** more than one breaking device (26) is provided.

9. Electric motor according to one of the preceding claims, **characterised in that** a face (38) of the braking element (28), which face is directed in the direction of the rotor (14), continues the contour of the stator (12) which surrounds the braking element (28).

10. Electric motor according to one of the preceding claims, **characterised in that** at least one squirrel-cage winding (42) is provided on the braking element (28).

11. Electric handtool device, in particular angle grinder, having a motor according to one of Claims 1 to 9.

## Revendications

1. Moteur électrique (10) en particulier pour une meuleuse d'angle, comportant un stator (12), ayant au moins une paire de pôles (16, 18) avec au moins deux pièces polaires (17, 19), orientées vers l'intérieur en direction du rotor (14), comportant respectivement deux pôles (16, 18), qui sont entourés d'un bobinage (24), dans lequel le stator (12) porte au moins une installation de freinage (26) destinée à freiner le rotor (14), comportant un élément de freinage (28), dans lequel l'élément de freinage (28) est mobile, pour assurer le freinage, en direction du contour extérieur du rotor (14) à l'encontre de la force de freinage et grâce au champ magnétique, lorsque le moteur électrique (10) est alimenté électriquement, dans lequel l'installation de freinage (26) est disposé dans le stator (12) dans la direction périphérique entre les deux pôle (16, 18), **caractérisé en ce que** l'élément de freinage (28) est constitué d'un levier de freinage mono-bras (29) qui est basculant à une de ses extrémités autour d'un point de rotation (30) dans le stator (12), de telle manière que l'on renonce au montagne du levier de freinage (29) par un arbre ou un axe.

2. Moteur électrique selon la revendication 1, **caractérisé en ce que** l'élément de freinage (28) est guidé par un guidage à coulisse ménagé dans la culasse du stator (12).

3. Moteur électrique selon la revendication 1ou 2, **caractérisé en ce que** le point de rotation (30) du levier de freinage (29) est disposé, relativement à la garniture de frein (32) et au sens de rotation du rotor (14) du côté de l'usure.

4. Moteur électrique selon la revendication 1, 2 ou 3, **caractérisé en ce que** l'élément de freinage (28) est constitué d'un matériau magnétiquement conducteur.

5. Moteur électrique selon l'une des revendications précédentes, **caractérisé en ce que** l'élément de freinage (28) est pourvu d'une garniture de frein (32) sur son côté tourné vers le rotor (14), qui est de préférence constitué d'un matériau magnétiquement faiblement conducteur.

6. Moteur électrique selon l'une des revendications précédentes, **caractérisé en ce qu'**il comporte un ressort (40) disposé axialement qui sollicite l'élément de freinage (28) par une force de freinage en direction du rotor (14), dans lequel le ressort (40) est notamment constitué d'une barrette ressort.

7. Moteur électrique selon l'une des revendications précédentes 1 à 4, **caractérisé en ce que** le ressort est constitué d'un ressort agissant radialement, dans lequel un ou plusieurs ressorts agissant radicalement sont prévus.

8. Moteur électrique selon l'une des revendications précédentes, **caractérisé en ce qu'**il comporte une ou plusieurs installations de freinage (26).

9. Moteur électrique selon l'une des revendications précédentes, **caractérisé en ce qu'**une surface (38) de l'élément de freinage (28), dirigée vers le rotor (14) prolonge le contour du stator (12) qui entoure l'élément de freinage (28).

10. Moteur électrique selon l'une des revendications précédentes, **caractérisé en ce que** sur l'élément de freinage (28) est prévu au moins un bobinage de court-circuit (42).

11. Appareil électroportatif, en particulier appareil de meulage d'angle, avec un moteur électrique selon l'une des revendications 1 à 9.
